# FASCICULE DE BREVET EUROPEEN

(11) **EP 2 909 788 B1**
(45) Date de publication et mention de la délivrance du brevet: **28.09.2016**
(21) Numéro de dépôt: 13779560.5
(22) Date de dépôt: 16.10.2013
(51) Int. Cl.: G06K 9/00

(54) **PROCÉDÉ DE SEGMENTATION DE DOIGTS**
VERFAHREN ZUR FINGERSEGMENTIERUNG
METHOD FOR SEGMENTING FINGERS

(30) Priorité: 18.10.2012 FR 1259925
(43) Date de publication de la demande: 26.08.2015
(73) Titulaire: Morpho, 92130 Issy-les-Moulineaux (FR)
(72) Inventeur: PICARD, Sylvaine, F-92130 Issy les Moulineaux (FR)
(74) Mandataire: Le Guen-Maillet
(86) Numéro de dépôt international: PCT/EP2013/071655
(87) Numéro de publication internationale: WO 2014/060490

(56) Documents cités:
- FR-A1- 2 927 713
- SOTIRIS MALASSIOTIS ET AL: "Personal Authentication Using 3-D Finger Geometry", IEEE TRANSACTIONS ON INFORMATION FORENSICS AND SECURITY, IEEE, PISCATAWAY, NJ, US, vol. 1, no. 1, 1 mars 2006 (2006-03-01), pages 12-21, XP007910483, ISSN: 1556-6013, DOI: 10.1109/TIFS.2005.863508
- YI CHEN ET AL: "3D Touchless Fingerprints: Compatibility with Legacy Rolled Images", BIOMETRIC CONSORTIUM CONFERENCE, 2006 BIOMETRICS SYMPOSIUM: SPECIAL SE SSION ON RESEARCH AT THE, IEEE, PI, 1 septembre 2006 (2006-09-01), pages 1-6, XP031141444, ISBN: 978-1-4244-0486-5
- M. Bennanoun et G.J. Manic: "Object Recognition : Fundamentals and Case Studies", 1 janvier 2002 (2002-01-01), Springer, XP002696047, page 26,344, page 26, ligne 33 - ligne 35 reference 315; page 344
- Bahram Javidi: "Image Recognition and Classification", 1 janvier 2002 (2002-01-01), Marcel Dekker, XP002696048, pages 250,275-276, page 250, ligne 26 - ligne 37 references 25-28; page 275 - page 276
- TAKEDA M ET AL: "Fourier transform profilometry for the automatic measurement of 3-D object shapes", APPLIED OPTICS, OPTICAL SOCIETY OF AMERICA, WASHINGTON, DC; US, vol. 22, no. 24, 15 décembre 1983 (1983-12-15), pages 3977-3982, XP002453661, ISSN: 0003-6935, DOI: 10.1364/AO.22.003977
- X. SU ET W. CHEN: "Fourier Transform Profilometry : a Review", OPTICS AND LASERS IN ENGINEERING, vol. 35, 1 janvier 2001 (2001-01-01), pages 263-284, XP008161675,

## Description

La présente invention concerne un procédé de segmentation de doigts au cours de captures d'images à la volée, ainsi qu'un dispositif de segmentation mettant en oeuvre un tel procédé. Elle trouve application dans le domaine de la reconnaissance d'un individu par ses empreintes et en particulier par ses empreintes digitales.

La capture d'une image de l'empreinte digitale d'un individu peut s'effectuer avec contact ou sans contact. Lorsque la capture s'effectue avec contact, l'individu place son doigt sur une vitre à l'arrière de laquelle est disposé un dispositif d'acquisition qui capture l'image de l'empreinte digitale.

Lorsque la capture s'effectue sans contact, l'individu passe ses doigts devant une vitre à l'arrière de laquelle un dispositif d'acquisition capture une ou plusieurs images des doigts lors de leur passage. De cette/ces images est alors extraite l'image de l'empreinte digitale de l'individu.

Un tel procédé et le dispositif correspondant sont décrits dans le document FR-A-2 927 713.

En fonction de différents paramètres, comme par exemple la vitesse de passage des doigts, il peut arriver que la capture de l'image de l'empreinte digitale soit difficile car la localisation de l'empreinte digitale sur l'image capturée n'est pas clairement définie.

Un objet de la présente invention est de proposer un procédé de segmentation des doigts passant sans contact devant un dispositif d'acquisition. Ce procédé de segmentation permet de segmenter les doigts qui sont sur l'image capturée et donc de cerner la zone où se situe effectivement une empreinte. Le procédé de segmentation selon l'invention ne présente donc pas les inconvénients de l'état de la technique, et, en particulier, permet de localiser avec précision les positions des doigts et des empreintes digitales.

A cet effet, est proposé un procédé de segmentation de doigts, ledit procédé de segmentation étant mis en oeuvre par un dispositif de segmentation comprenant une unité de traitement, un dispositif d'acquisition destiné à capturer une image desdits doigts lorsqu'ils passent devant ledit dispositif d'acquisition selon une direction d'avancement et un dispositif de projection destiné à projeter une mire présentant un axe d'iso-intensité sur lesdits doigts, ledit procédé de segmentation comportant :
- une étape de capture au cours de laquelle le dispositif d'acquisition capture une image des doigts et de la mire,
- une étape de calcul au cours de laquelle l'unité de traitement calcule l'image de phase non déroulée à partir de l'image de la mire ainsi capturée,
- une étape de dérivation au cours de laquelle, pour chaque pixel de l'image de phase ainsi calculée, l'unité de traitement calcule la dérivée de la phase selon l'axe d'iso-intensité de la mire, et
- une étape de régionalisation au cours de laquelle l'unité de traitement associe chaque pixel où la dérivée de la phase a été calculée à une région regroupant tous les pixels voisins de proche en proche où la dérivée de la phase présente la même polarité, et
- une étape de reconnaissance au cours de laquelle la localisation de chaque doigt est reconnue à partir de l'analyse des régions ainsi déterminées.

Avantageusement, l'étape de régionalisation consiste en:
- une étape d'initialisation au cours de laquelle un premier pixel où la dérivée de la phase a été calculée est choisi,
- une étape de création au cours de laquelle une région ayant la polarité de la dérivée dudit premier pixel est créée,
pour chaque pixel connexe audit premier pixel,
- une étape de comparaison de la polarité de la dérivée de la phase dudit pixel connexe par rapport à la polarité de la dérivée de la phase dudit premier pixel,
- une étape de regroupement positif au cours de laquelle ledit pixel connexe est regroupé dans la région incluant ledit premier pixel lorsque le résultat de l'étape de comparaison est positif,
lorsque chaque pixel connexe audit premier pixel a été ainsi traité,
- une étape de désignation au cours de laquelle l'un desdits pixels connexes est désigné comme premier pixel,
- une première étape de bouclage au cours de laquelle le processus boucle sur l'étape de comparaison de manière à progresser ainsi de proche en proche et couvrir l'ensemble de l'image, et
lorsque tous les pixels voisins de proche en proche et ayant une dérivée de la phase de même polarité que la dérivée de la phase desdits premiers pixels ont été traités,
- une étape de de choix au cours de laquelle un pixel non encore traité est choisi comme premier pixel, et
- une deuxième étape de bouclage au cours de laquelle le processus boucle sur l'étape de création.

Avantageusement, le procédé de segmentation comporte juste après l'étape de régionalisation et avant l'étape de reconnaissance:
- une étape de repérage au cours de laquelle chaque région ayant une polarité et incluse dans une autre région de polarité inverse est repérée,
pour chaque région ainsi repérée
- une étape de mesurage au cours de laquelle la superficie de ladite région est calculée,
- une étape de suppression au cours de laquelle ladite région ainsi repérée est supprimée si sa superficie est inférieure à un seuil, et au cours de laquelle la région dans laquelle ladite région ainsi repérée est incluse absorbe ladite région ainsi repérée.

L'invention propose également un dispositif de segmentation de doigts comportant:
- un dispositif de projection destiné à projeter une mire présentant un axe d'iso-intensité sur lesdits doigts,
- un dispositif d'acquisition destiné à capturer une image desdits doigts et de la mire ainsi projetée lorsque les doigts passent devant ledit dispositif d'acquisition selon une direction d'avancement, et
- une unité de traitement comportant:
- des moyens de calcul destinés à calculer l'image de phase non déroulée à partir de l'image de la mire capturée,
- des moyens de dérivation destinés à calculer, pour chaque pixel de l'image de phase, la dérivée de la phase selon l'axe d'iso-intensité,
- des moyens de régionalisation destinés à associer chaque pixel à une région regroupant tous les pixels voisins de proche en proche où la dérivée de la phase présente la même polarité, et
- des moyens de reconnaissance destinés à localiser chaque doigt par analyse des régions.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une schématisation du défilement de doigts devant un dispositif d'acquisition,
la Fig. 2 est une image montrant la régionalisation des doigts,
la Fig. 3 est un algorithme d'un procédé de segmentation selon l'invention,
la Fig. 4a est une vue en coupe selon la ligne IV-IV de la Fig. 1,
la Fig. 4b est une vue en coupe selon la ligne V-V de la Fig. 4a,
la Fig. 5a est une image de phase de doigts,
la Fig. 5b est une représentation schématique de vecteurs dérivée de l'image de phase sur un doigt,
la Fig. 6 est une image résultant d'une étape intermédiaire du procédé de segmentation, et
la Fig. 7 montre un exemple d'une mire constituée de lignes non régulièrement espacées.

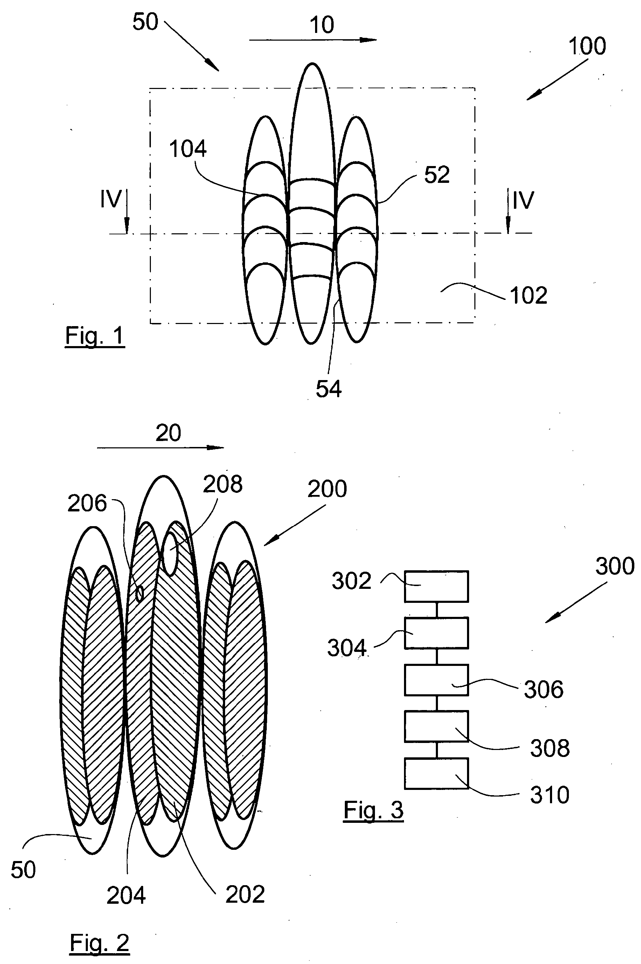

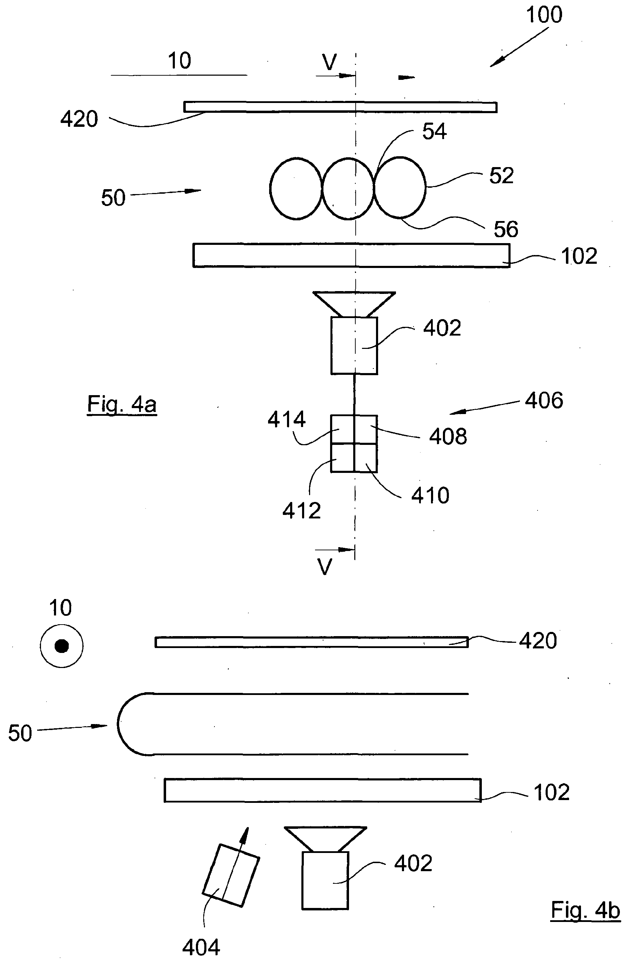

La Fig. 1 est une représentation schématique d'un dispositif de segmentation 100, la Fig. 4a est une coupe selon la ligne IV-IV de la Fig. 1 et la Fig. 4b est une coupe selon la ligne V-V de la Fig. 4a. Le dispositif de segmentation 100 comprend une vitre 102 en vis-à-vis de laquelle est défini un espace de capture. L'individu qui souhaite se faire identifier passe ses doigts 50 devant la vitre 102 selon une direction d'avancement représentée par la flèche 10. A l'arrière de la vitre 102 est disposé un dispositif d'acquisition (402, Fig. 4a-b) par exemple du type CCD, et un dispositif de projection (404, Fig. 4b) destiné à projeter une mire 104. Dans le mode de réalisation de l'invention présenté ici, le dispositif de projection 404 est placé dans l'alignement du dispositif d'acquisition 402 selon un plan perpendiculaire à la direction d'avancement 10.

Le dispositif d'acquisition 402 et le dispositif de projection 404 sont des éléments du dispositif de segmentation 100.

Le dispositif d'acquisition 402 est destiné à capturer au moins une image, mais de préférence, une pluralité d'images successives des doigts 50 et de la mire 104 projetée sur les doigts 50. Le dispositif d'acquisition 402 possède un capteur ayant une vitesse d'acquisition suffisante pour capturer au moins une image des doigts 50 en mouvement.

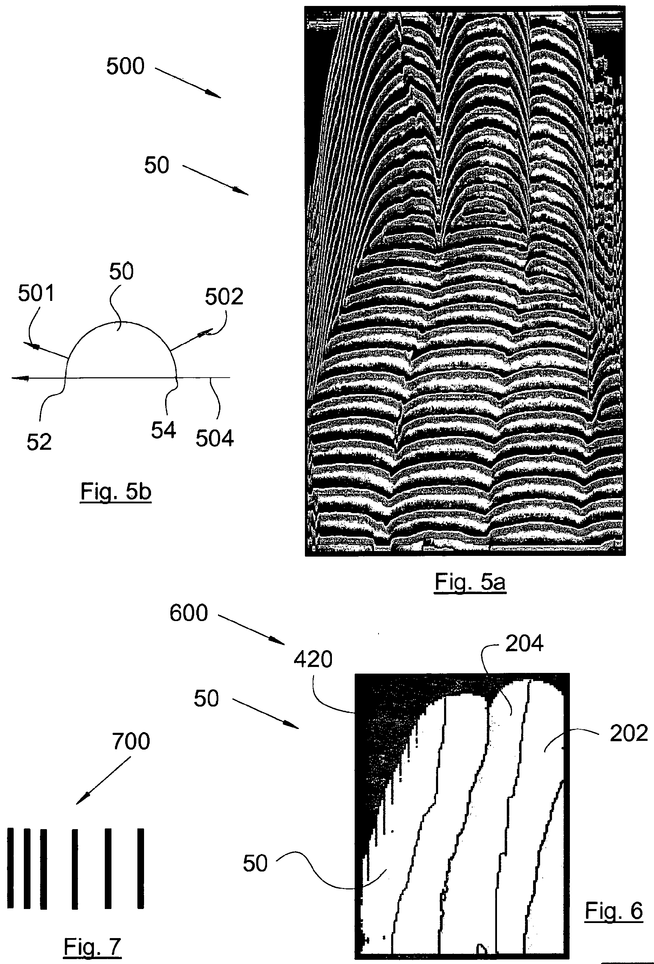

Dans la direction d'avancement 10, chaque doigt 50 présente un bord d'attaque 52 et un bord de fuite 54 qui délimite le doigt 50 par rapport au vide ou au doigt 50 voisin. Chaque doigt 50 (voir Fig. 5b) présente une forme courbée entre le bord d'attaque 52 et le bord de fuite 54. Comme cela est mieux vu sur la Fig. 4a, la surface du doigt 50 se rapproche du dispositif d'acquisition 402 entre le bord d'attaque 52 et une zone extrêmale 56 et s'éloigne du dispositif d'acquisition 402 entre la zone extrêmale 56 et le bord de fuite 54. La zone extrêmale 56 est la partie du doigt 50 la plus proche de la vitre 102.

Le dispositif de projection 404 projette la mire 104 qui se superpose aux doigts 50 et dont l'image est capturée en même temps que l'image des doigts 50.

La mire 104 est par exemple une mire sinusoïdale, ou une mire carrée.

Les lignes d'iso-intensité de la mire 104 sont ici globalement orientées parallèlement à la direction d'avancement 10, comme cela est visible sur la Fig. 1. La fréquence de la mire 104 est choisie pour être très supérieure à la fréquence des crêtes de la peau. Elle est de l'ordre de 45 pixels à environ 600 DPI.

Pour faciliter la distinction entre les doigts 50 et la mire 104, la mire 104 comprend trois couleurs (R, V, B) avec un éclairage uniforme dans une des trois couleurs et des motifs lumineux répétitifs dans au moins une des deux autres couleurs. De préférence, l'éclairage uniforme est en vert et les motifs lumineux répétitifs sont en rouge et/ou en bleu.

En variante, le dispositif de segmentation 100 peut utiliser un dispositif d'éclairage uniforme dans une couleur, et un dispositif de projection 404 dans une ou plusieurs autres couleurs.

Le dispositif d'acquisition 402 est adapté à extraire une image représentative de la mire 104 pour la transmettre à une unité de traitement 406 du dispositif de segmentation 100 et qui prend de préférence la forme d'un ordinateur.

La mire 104 projetée sur les doigts 50 apparaît déformée sur les images capturées par le dispositif d'acquisition 402.

Après capture, l'image des doigts 50 et de la mire 104 est traitée par l'unité de traitement 406.

Une image de phase non déroulée est calculée à partir de l'image de la mire 104 déformée vue sur l'image capturée.

La Fig. 5a montre un exemple d'une image de phase 500 pour un ensemble de 3 doigts 50 éclairée par une mire sinusoïdale 104. La phase change de polarité le long des doigts 50 en passant d'une période à l'autre de la mire 104. Ces ruptures forment une forte variation des niveaux de gris dans ces zones de l'image et permet de calculer une dérivée de la phase qui soit fiable dans ces zones.

La Fig. 5b représente schématiquement deux vecteurs dérivés 501 et 502 de la phase en deux points d'un doigt 50. Du fait de la forme courbée et tubulaire du doigt 50, l'image de base est également courbée. Selon l'orientation du vecteur dérivé 501, 502, cette courbure induit un changement de signe de la projection du vecteur dérivé 501, 502 sur un axe de projection 504 perpendiculaire à l'axe longitudinal du doigt. L'axe de projection 504 est l'axe d'iso-intensité de la mire 104 qui est ici parallèle à la direction d'avancement 10 et orienté dans le même sens.

Ces changements de polarité constituent des sauts de phase.

Pour chaque pixel de l'image de phase ainsi calculée, la dérivée de la phase selon l'axe d'iso-intensité de la mire 104 est calculée, c'est à dire dans le mode de réalisation de l'invention présenté ici dans la direction d'avancement 10.

Chaque pixel, où la dérivée de la phase a été calculée, est associé à une région continue regroupant tous les pixels qui sont voisins de proche en proche et où la dérivée de la phase présente la même polarité. L'image présente donc généralement plusieurs régions "positives" où la dérivée de la phase est positive et plusieurs régions "négatives" où la dérivée de la phase est négative. Une région est constituée par le regroupement de tous les pixels ayant une dérivée de la phase de même polarité et qui est délimitée par des zones de transitions. Chaque zone de transition est constituée par la frontière entre la région considérée et une ou plusieurs régions regroupant des pixels ayant une dérivée de la phase de polarité inverse et/ou par la frontière entre la région considérée et les limites entre l'extérieur et le doigt 50, c'est à dire le bord d'attaque 52 et le bord de fuite 54.

La Fig. 2 montre une image 200 des doigts 50 sur laquelle sont représentées pour chaque doigt une région positive 202 et une région négative 204. La position de la région positive 202 et la position de la région négative 204 sont, sur la Fig. 2, arbitraires et peuvent être inversées selon les conventions choisies.

Dans le mode de réalisation choisi, explicité en partie ci-dessous, chaque doigt 50 présente successivement une région négative 204 puis une région positive 202.

La Fig. 6 montre une image 600 de deux doigts 50, chacun présentant une région positive 202 et une région négative 204.

La Fig. 3 est un algorithme d'un procédé de segmentation 300 selon l'invention.

Le procédé de segmentation 300 comprend :
- une étape de capture 302 au cours de laquelle une image des doigts 50 et de la mire 104 est capturée par le dispositif d'acquisition 402,
- une étape de calcul 304 au cours de laquelle l'image de phase non déroulée est calculée à partir de l'image de la mire 104 ainsi capturée,
- une étape de dérivation 306 au cours de laquelle, pour chaque pixel de l'image de phase ainsi calculée, la dérivée de la phase selon l'axe d'iso-intensité de la mire 104 est calculée,
- une étape de régionalisation 308 au cours de laquelle chaque pixel où la dérivée de la phase a été calculée, est associé à une région 202, 204 regroupant tous les pixels voisions de proche en proche où la dérivée de la phase présente la même polarité, et
- une étape de reconnaissance 310 au cours de laquelle la localisation de chaque doigt 50 est reconnue à partir de l'analyse des régions 202 et 204 déterminées par l'étape de régionalisation 308.

A partir de l'image issue de l'étape de reconnaissance 310, l'unité de traitement 406 peut localiser l'endroit où est située l'image de l'empreinte à identifier, c'est-à-dire à l'extrémité distale de chaque doigt 50 ainsi localisé.

L'image de l'empreinte peut alors être transmise à un système d'identification pour effectuer une comparaison avec des empreintes d'une base de données.

En outre, le procédé de segmentation 300 ainsi décrit est robuste, puisqu'en particulier il permet de segmenter les doigts 50, qu'ils soient écartés ou serrés. Le procédé de segmentation 300 est en outre rapide et, pour augmenter la vitesse d'obtention des résultats, il est également possible de sous-échantillonner l'image capturée. Il est en outre possible de segmenter chaque image indépendamment.

L'étape de reconnaissance 310 consiste à déterminer les zones de transition entre deux doigts 50 consécutifs ou entre un doigt 50 et l'extérieur.

L'étape de reconnaissance 310 va être plus précisément décrite à partir de la Fig. 2 qui montre une image 200 des régions 202 et 204 obtenues à la fin de l'étape de régionalisation 308.

L'étape de reconnaissance consiste en une étape de parcours au cours de laquelle l'image 200 est parcourue selon une direction de parcours 20 parallèle à l'axe d'iso-intensité de la mire 104, une étape de délimitation au cours de laquelle les zones de transitions correspondantes aux frontières entre deux régions 202 et 204 ayant des dérivées de la phase de polarité différentes ou aux frontières entre le fond et une région 202, 204 sont recherchées et une étape de regroupement au cours de laquelle les régions 202 et 204 qui sont susceptibles d'appartenir au même doigt 50 sont regroupées afin de constituer une représentation du doigt 50 et de permettre la localisation de l'empreinte à son extrémité distale.

L'étape de regroupement consiste à regrouper deux régions 202 et 204 voisines et ayant des dérivées de la phase de polarité différentes en prenant garde à la polarité et à la direction de parcours 20. Par exemple, sur la Fig. 2, l'image 200 présente successivement, en suivant la direction de parcours 20, une zone de transition entre le fond et une première région négative 204, une zone de transition entre la première région négative 204 et une première région positive 202, une zone de transition entre la première région positive 202 et une deuxième région négative 204, une zone de transition entre la deuxième région négative 204 et une deuxième région positive 202, une zone de transition entre la deuxième région positive 202 et une troisième région négative 204, une zone de transition entre la troisième région négative 204 et une troisième région positive 202, et une zone de transition entre la troisième région positive 202 et le fond.

A partir des conventions de l'exemple de la Fig. 2, un doigt 50 est considéré comme consistant en une région négative 204 suivie d'une région positive 202. Selon les conventions envisagées ici, l'étape de regroupement consiste à définir un premier doigt 50 par regroupement de la première région négative 204 et de la première région positive 202, un deuxième doigt 50 par regroupement de la deuxième région négative 204 et de la deuxième région positive 202, et un troisième doigt 50 par regroupement de la troisième région négative 204 et de la troisième région positive 202.

Bien sûr, en fonction de l'image 200, il est possible que certaines régions 202,204 soient manquantes ou mal délimitées comme par exemple sur la Fig. 6.

Sur la Fig. 6, le doigt 50 à gauche est parfaitement défini, à gauche, par la zone de transition entre le fond et sa région négative 204, et à droite par la zone de transition entre sa région positive 202 et la région négative 204 du doigt voisin.

Par contre, ledit doigt voisin 50 est parfaitement délimité à gauche par la zone de transition entre sa région négative 204 et la région positive 202 du doigt gauche 50, mais la zone de transition à droite est constituée par une zone de transition avec le fond (partie haute) et une zone de transition avec un doigt droit 50 (en bas).

Le doigt droit 50 est lui incomplètement délimité puisque seule une partie de la région négative 204 est visible. La zone de transition à droite correspond ici à la zone de transition avec le fond.

Les exemples montrés ici présentent des doigts 50 qui sont serrés. Mais il est possible que certains doigts 50 soient écartés les uns des autres. Les zones de transition seront alors différentes puisqu'il y aura des zones de transition avec le fond au milieu de l'image, mais chaque doigt 50 sera quand même constitué d'une région négative 204 suivie d'une région positive 202 selon les conventions choisies ici.

Une zone de transition entre le fond et une région 202, 204 est déterminée par exemple par différence de contraste avec l'arrière plan 420.

Afin de mettre en oeuvre le procédé de segmentation 300, l'unité de traitement 406 comporte:
- des moyens de calcul 408 destinés à calculer l'image de phase non déroulée à partir de l'image de la mire 104 capturée,
- des moyens de dérivation 410 destinés à calculer, pour chaque pixel de l'image de phase, la dérivée de la phase selon l'axe d'iso-intensité de la mire 104,
- des moyens de régionalisation 412 destinés à associer chaque pixel à une région regroupant tous les pixels voisins de proche en proche où la dérivée de la phase présente la même polarité, et
- des moyens de reconnaissance 414 destinés à localiser chaque doigt 50 par analyse des régions 202 et 204.

L'étape de régionalisation 308 consiste avantageusement en:
- une étape d'initialisation au cours de laquelle un premier pixel où la dérivée de la phase a été calculée est choisi,
- une étape de création au cours de laquelle une région ayant la polarité de la dérivée dudit premier pixel est créée,
pour chaque pixel connexe audit premier pixel,
- une étape de comparaison de la polarité de la dérivée de la phase dudit pixel connexe par rapport à la polarité de la dérivée de la phase dudit premier pixel,
- une étape de regroupement positif au cours de laquelle ledit pixel connexe est regroupé dans la région incluant ledit premier pixel lorsque le résultat de l'étape de comparaison est positif, c'est-à-dire lorsque la dérivée de la phase dudit pixel connexe et la dérivée de la phase dudit premier pixel ont la même polarité,
lorsque chaque pixel connexe audit premier pixel a été ainsi traité,
- une étape de désignation au cours de laquelle l'un desdits pixels connexes est désigné comme premier pixel,
- une première étape de bouclage au cours de laquelle le processus boucle sur l'étape de comparaison de manière à progresser ainsi de proche en proche et couvrir l'ensemble de l'image, et
lorsque tous les pixels voisins de proche en proche et ayant une dérivée de la phase de même polarité que la dérivée de la phase desdits premiers pixels ont été traités,
- une étape de de choix au cours de laquelle un pixel non encore traité est choisi comme premier pixel, et
- une deuxième étape de bouclage au cours de laquelle le processus boucle sur l'étape de création.

A la fin de l'étape de régionalisation 308, il apparaît des régions 202 et 204 de grandes dimensions et des régions de petites dimensions 206 et 208 qui sont incluses dans les régions 202 et 204 de grandes dimensions mais en ayant des polarités inverses. Ces régions 206 et 208 de petites dimensions sont dues aux aléas de la segmentation.

Le traitement de ces régions 206 et 208 de petites dimensions peut prendre la forme d'une suppression de ladite région 206, 208 lorsque sa superficie est inférieure à un seuil. Par exemple, la région 206 sera supprimée et la région 204 absorbera cette surface et prendra la polarité de la région 204 de grandes dimensions correspondante.

Le traitement de ces régions 206 et 208 de petites dimensions peut prendre la forme d'une fusion de ladite région 206, 208 avec l'une des régions 202 ou 204 de grandes dimensions lorsque sa superficie est supérieure audit seuil. Par exemple, la région 208 sera fusionnée avec la région 204.

Le traitement s'effectue juste après l'étape de régionalisation 308 et avant l'étape de reconnaissance 310. Le traitement est effectué par l'unité de traitement qui comporte les moyens appropriés et le traitement peut consister en:
- une étape de repérage au cours de laquelle chaque région 206, 208 ayant une polarité et incluse dans une autre région 202, 204 de polarité inverse est repérée, pour chaque région 206, 208 ainsi repérée
- une étape de mesurage au cours de laquelle la superficie de ladite région 206, 208 est calculée,
- une étape de suppression au cours de laquelle ladite région 206 ainsi repérée est supprimée si sa superficie est inférieure à un seuil, et au cours de laquelle la région 204 dans laquelle ladite région 206 ainsi repérée est incluse absorbe ladite région 206 ainsi repérée,
- une étape de fusion au cours de laquelle ladite région 208 ainsi repérée est fusionnée avec la région 204 dans laquelle ladite région 206 ainsi repérée n'est pas incluse.

La description ci-dessus s'appuie plus particulièrement sur une image des doigts 50, ce mode de réalisation est plus particulièrement adapté lorsque l'image ainsi capturée permet de visualiser l'ensemble des doigts 50 qu'il est nécessaire d'avoir pour une bonne identification.

Mais il est possible de capturer plusieurs images des doigts 50 et d'effectuer la segmentation pour chaque image ainsi capturée. Il est ainsi possible que l'ensemble des doigts 50 soit contenu sur deux ou plus d'images.

La mire présentée ci-dessus peut être constituée d'un ensemble de lignes régulièrement espacées, mais la mire peut également être constituée d'un ensemble de lignes régulièrement espacées par morceaux. La Fig. 7 montre un exemple d'une telle mire 700, c'est-à-dire périodique avec des fréquences pouvant varier localement.

## Revendications

1. Procédé de segmentation (300) de doigts (50), ledit procédé de segmentation (300) étant mis en oeuvre par un dispositif de segmentation (100) comprenant une unité de traitement (406), un dispositif d'acquisition (402) destiné à capturer une image desdits doigts (50) lorsqu'ils passent devant ledit dispositif d'acquisition (402) selon une direction d'avancement (10) et un dispositif de projection (404) destiné à projeter une mire (104) présentant un axe d'iso-intensité sur lesdits doigts (50), ledit procédé de segmentation (300) comportant :
- une étape de capture (302) au cours de laquelle le dispositif d'acquisition (402) capture une image des doigts (50) et de la mire (104),
- une étape de calcul (304) au cours de laquelle l'unité de traitement (406) calcule l'image de phase non déroulée à partir de l'image de la mire (104) ainsi capturée,
- une étape de dérivation (306) au cours de laquelle, pour chaque pixel de l'image de phase ainsi calculée, l'unité de traitement calcule la dérivée de la phase selon l'axe d'iso-intensité de la mire (104), et
- une étape de régionalisation (308) au cours de laquelle l'unité de traitement (406) associe chaque pixel où la dérivée de la phase a été calculée à une région (202, 204) regroupant tous les pixels voisins de proche en proche où la dérivée de la phase présente la même polarité, et
- une étape de reconnaissance (310) au cours de laquelle la localisation de chaque doigt (50) est reconnue à partir de l'analyse des régions (202, 204) ainsi déterminées.

2. Procédé de segmentation (300) selon la revendication 1, **caractérisé en ce que** l'étape de régionalisation (308) consiste en:
- une étape d'initialisation au cours de laquelle un premier pixel où la dérivée de la phase a été calculée est choisi,
- une étape de création au cours de laquelle une région ayant la polarité de la dérivée dudit premier pixel est créée,
pour chaque pixel connexe audit premier pixel,
- une étape de comparaison de la polarité de la dérivée de la phase dudit pixel connexe par rapport à la polarité de la dérivée de la phase dudit premier pixel,
- une étape de regroupement positif au cours de laquelle ledit pixel connexe est regroupé dans la région incluant ledit premier pixel lorsque le résultat de l'étape de comparaison est positif,
lorsque chaque pixel connexe audit premier pixel a été ainsi traité,
- une étape de désignation au cours de laquelle l'un desdits pixels connexes est désigné comme premier pixel,
- une première étape de bouclage au cours de laquelle le processus boucle sur l'étape de comparaison de manière à progresser ainsi de proche en proche et couvrir l'ensemble de l'image, et
lorsque tous les pixels voisins de proche en proche et ayant une dérivée de la phase de même polarité que la dérivée de la phase desdits premiers pixels ont été traités,
- une étape de de choix au cours de laquelle un pixel non encore traité est choisi comme premier pixel, et
- une deuxième étape de bouclage au cours de laquelle le processus boucle sur l'étape de création.

3. Procédé de segmentation (300) selon l'une des revendications 1 ou 2, **caractérisé en ce qu'**il comporte juste après l'étape de régionalisation (308) et avant l'étape de reconnaissance (310):
- une étape de repérage au cours de laquelle chaque région (206, 208) ayant une polarité et incluse dans une autre région (202, 204) de polarité inverse est repérée, pour chaque région (206, 208) ainsi repérée
- une étape de mesurage au cours de laquelle la superficie de ladite région (206, 208) est calculée,
- une étape de suppression au cours de laquelle ladite région (206) ainsi repérée est supprimée si sa superficie est inférieure à un seuil, et au cours de laquelle la région (204) dans laquelle ladite région (206) ainsi repérée est incluse absorbe ladite région (206) ainsi repérée.

4. Dispositif de segmentation (100) de doigts (50) comportant:
- un dispositif de projection (404) destiné à projeter une mire (104) présentant un axe d'iso-intensité sur lesdits doigts (50),
- un dispositif d'acquisition (402) destiné à capturer une image desdits doigts (50) et de la mire (104) ainsi projetée lorsque les doigts (50) passent devant ledit dispositif d'acquisition (402) selon une direction d'avancement (10), et
- une unité de traitement (406) comportant:
- des moyens de calcul (408) destinés à calculer l'image de phase non déroulée à partir de l'image de la mire (104) capturée,
- des moyens de dérivation (410) destinés à calculer, pour chaque pixel de l'image de phase, la dérivée de la phase selon l'axe d'iso-intensité,
- des moyens de régionalisation (412) destinés à associer chaque pixel à une région (202, 204) regroupant tous les pixels voisins de proche en proche ou la dérivée de la phase présente la même polarité, et
- des moyens de reconnaissance (414) destinés à localiser chaque doigt (50) par analyse des régions (202, 204).

## Patentansprüche

1. Verfahren zum Segmentieren (300) von Fingern (50), wobei das genannte Segmentierungsverfahren (300) von einer Segmentierungsvorrichtung (100) umgesetzt wird, die eine Verarbeitungseinheit (406) umfasst, sowie eine Erfassungsvorrichtung (402), die dazu bestimmt ist, ein Bild der genannten Finger (50) zu erfassen, wenn diese in einer Vorschubrichtung (10) vor der genannten Erfassungsvorrichtung (402) vorbeilaufen, und eine Projektionsvorrichtung (404), die dazu bestimmt ist, ein Muster (104), das eine Iso-Intensitätsachse aufweist, auf die genannten Finger (50) zu projizieren, wobei das Segmentierungsverfahren (300) folgende Schritte beinhaltet:
- einen Erfassungsschritt (302), in dessen Verlauf die Erfassungsvorrichtung (402) ein Bild der Finger (50) und des Musters (104) erfasst,
- einen Berechnungsschritt (304), in dessen Verlauf die Verarbeitungseinheit (406) das nicht demodulierte Phasenbild ausgehend von dem so erfassten Bild des Musters (104 berechnet,
- einen Ableitungsschritt (306), in dessen Verlauf die Verarbeitungseinheit für jedes Pixel des so berechneten Phasenbilds die Phasenableitung nach der Iso-Intensitätsachse des Musters (104) berechnet, und
- einen Regionalisierungsschritt (308), in dessen Verlauf die Verarbeitungseinheit (406) jedes Pixel, dort, wo die Phasenableitung berechnet wurde, einer Region (202, 204) zuordnet, die alle jeweils benachbarten Pixel nacheinander dort zusammenfasst, wo die Phasenableitung die gleiche Polarität aufweist, und
- einen Erkennungsschritt (310), in dessen Verlauf die Lokalisierung jedes Fingers (50) ausgehend von der Analyse der so bestimmten Regionen (202, 204) erkannt wird.

2. Segmentierungsverfahren (300) nach Patentanspruch 1, **dadurch gekennzeichnet, dass** der Regionalisierungsschritt (308) aus folgenden Schritten besteht:
- einem Initialisierungsschritt, in dessen Verlauf ein erstes Pixel dort, wo die Phasenableitung berechnet wurde, ausgewählt wird,
- einen Erzeugungsschritt, in dessen Verlauf eine Region erzeugt wird, die die Polarität der Ableitung des genannten ersten Pixels aufweist,
für jedes, dem genannten ersten Pixel zugehörige Pixel,
- einen Vergleichsschritt, in dessen Verlauf die Polarität der Phasenableitung des genannten zugehörigen Pixels mit der Polarität der Phasenableitung des genannten ersten Pixels verglichen wird,
- einen Schritt der positiven Zusammenfassung, in dessen Verlauf das genannte zugehörige Pixel der Region, die das genannte erste Pixel enthält zugeordnet wird, wenn das Ergebnis des Vergleichsschritts positiv ist,
nachdem jedes, dem ersten Pixel zugehörige Pixel so verarbeitet wurde,
- einen Bezeichnungsschritt, in dessen Verlauf eines der genannten zugehörigen Pixel als erstes Pixel bezeichnet wird,
- einen ersten Schleifungsschritt, in dessen Verlauf der Prozess mit dem Vergleichsschritt eine Schleife bildet, um von einem Pixel zum nächsten fortzuschreiten und das ganze Bild abzudecken, und
nachdem alle jeweils benachbarten Pixel mit einer Phasenableitung gleicher Polarität, wie die der Phasenableitung der genannten ersten Pixel, verarbeitet wurden,
- einen Auswählschritt, in dessen Verlauf ein noch unverarbeitetes Pixel als erstes Pixel ausgewählt wird, und
- einen zweiten Schleifungsschritt, in dessen Verlauf der Prozess mit dem Erzeugungsschritt eine Schleife bildet.

3. Segmentierungsverfahren (300) nach einem der Patentansprüche 1 oder 2, **dadurch gekennzeichnet, dass** es gleich nach dem Regionalisierungsschritt (308) und noch vor dem Erkennungsschritt (310) die folgenden Schritte beinhaltet:
- einen Auffindungsschritt, in dessen Verlauf jede, eine Polarität aufweisende und in einer anderen Region umgekehrter Polarität enthaltene Region (206, 208) aufgefunden wird,
- für jede, so aufgefundene Region (206, 208):
- einen Messschritt, in dessen Verlauf die Fläche der genannten Region (206, 208) berechnet wird,
- einen Löschschritt, in dessen Verlauf die genannte, so aufgefundene Region (206) gelöscht wird, wenn ihre Fläche kleiner ist, als ein Schwellenwert und in dessen Verlauf die Region (204), die die genannte, so aufgefundene Region (206) enthält, die genannte, so aufgefundene Region (206) absorbiert.

4. Segmentierungsvorrichtung (100) von Fingern (50) beinhaltend:
- eine Projektionsvorrichtung (404), die dazu bestimmt ist, ein Muster (104), das eine Iso-Intensitätsachse aufweist, auf die genannten Finger (50) zu projizieren,
- eine Erfassungsvorrichtung (402), die dazu bestimmt ist, von den genannten Fingern (50) und von dem so projizierten Muster (104) ein Bild zu erfassen, wenn die Finger (50) in einer Vorschubrichtung (10) vor der genannten Erfassungsvorrichtung (402) vorbeilaufen und
- eine Verarbeitungseinheit (406) beinhaltend:
- Rechenmittel (408), die dazu bestimmt sind, das nicht demodulierte Phasenbild ausgehend von dem erfassten Bild des Musters (104) zu berechnen,
- Ableitungsmittel (410), die dazu bestimmt sind, für jedes Pixel des Phasenbilds die Ableitung der Phase nach der Iso-Intensitätsachse zu berechnen,
- Regionalisierungsmittel (412), die dazu bestimmt sind, jedes Pixel einer Region (202, 204) zuzuordnen, die jeweils alle benachbarten Pixel nacheinander dort zusammenfasst, wo die Phasenableitung die gleiche Polarität aufweist,
- Erkennungsmittel (414), die dazu bestimmt sind, jeden Finger (50) mit Hilfe einer Analyse der Regionen (202, 204) zu lokalisieren.

## Claims

1. Method (300) for segmenting fingers (50), said segmentation method (300) being implemented by a segmentation device (100) comprising a processing unit (406), an acquisition device (402) intended to capture an image of said fingers (50) when they pass in front of said acquisition device (402) in a direction of advancement (10) and a projection device (404) intended to project a sight (104) having an isointensity axis on said fingers (50), said segmentation method (300) comprising:
- a capture step (302) during which the acquisition device (402) captures an image of the fingers (50) and of the sight (104),
- a computing step (304) during which the processing unit (406) computes the unrolled phase image from the image of the sight (104) thus captured,
- a derivation step (306) during which, for each pixel of the phase image thus computed, the processing unit computes the derivative of the phase along the isointensity axis of the sight (104), and
- a regionalisation step (308) during which the processing unit (406) associates each pixel where the derivative of the phase has been computed with a region (202, 204) grouping all the adjoining pixels step by step where the derivative of the phase has the same polarity, and
- a recognition step (310) during which the location of each finger (50) is recognised from the analysis of the regions (202, 204) thus determined.

2. Segmentation method (300) according to claim 1, **characterised in that** the regionalisation step (308) consists of:
- an initialisation step during which a first pixel where the derivative of the phase has been computed is chosen,
- a creation step during which a region having the polarity of the derivative of said first pixel is created,
for each pixel related to said first pixel,
- a step of comparing the polarity of the derivative of the phase of said related pixel with respect to the polarity of the derivative of the phase of said first pixel,
- a positive-grouping step during which said related pixel is grouped in the region including said first pixel when the result of the comparison step is positive,
when each pixel related to said first pixel has thus been processed,
- a designation step during which one of said related pixels is designated as the first pixel,
- a first looping step during which the process is looped onto the comparison step so as thus step by step to progress and cover the whole of the image, and
when all the pixels adjacent step by step and having a derivative of the phase with the same polarity as the derivative of the phase of said first pixels have been processed,
- a choosing step during which a pixel not yet processed is chosen as the first pixel, and
- a second looping step during which the process loops onto the creation step.

3. Segmentation method (300) according to one of claims 1 or 2, **characterised in that** it comprises, just after the regionalisation step (308) and before the recognition step (310):
- a marking step during which each region (206, 208) having a polarity and included in another region (202, 204) with the reverse polarity is marked,
for each region (206, 208) thus marked
- a measuring step during which the surface area of said region (206, 208) is computed,
- a deletion step during which said region (206) thus marked is deleted if its surface area is below a threshold, and during which the region (204) in which said region (206) thus marked is included absorbs said region (206) thus marked.

4. Device (100) for segmenting fingers (50), comprising:
- a projection device (404) intended to project a sight (104) having an isointensity axis on said fingers (50),
- an acquisition device (402) intended to capture an image of said fingers (50) and of the sight (104) thus projected when the fingers (50) pass in front of said acquisition device (402) in an advancement direction (10), and
- a processing unit (406) comprising:
- computing means (408) intended to compute the unrolled phase image from the image of the sight (104) captured,
- derivation means (410) intended to compute, for each pixel of the phase image, the derivative of the phase along the isointensity axis,
- regionalisation means (412) intended to associate each pixel with a region (202, 204) grouping together all the adjacent pixels step by step where the derivative of the phase has the same polarity, and
- recognition means (414) intended to locate each finger (50) by analysing the regions (202, 204).
